# EUROPEAN PATENT SPECIFICATION

(11) **EP 2 215 542 B1**
(45) Date of publication and mention of the grant of the patent: **20.03.2013**
(21) Application number: 08854637.9
(22) Date of filing: 25.11.2008
(51) Int. Cl.: G06F 3/12, G06F 3/033

(54) **PRINTING OF POSITION-CODED DOCUMENTS**
DRUCKEN VON POSITIONSCODIERTEN DOKUMENTEN
IMPRESSION DE DOCUMENTS À CODE DE POSITION

(30) Priority: 26.11.2007 SE 0702615; 26.11.2007 US 990176 P
(43) Date of publication of application: 11.08.2010
(73) Proprietor: Anoto AB, 227 22 Lund (SE)
(72) Inventor: LYNGGAARD, Stefan, S-224 79 Lund (SE)
(74) Representative: Grönlund, Tim Linus Wilhelm
(86) International application number: PCT/SE2008/051341
(87) International publication number: WO 2009/070099

(56) References cited:
- WO-A1-2004/038651
- WO-A1-2006/135329
- WO-A2-2005/024623
- GB-A- 2 430 292
- US-A1- 2006 283 949
- US-A1- 2007 023 523

## Description

The present invention generally relates to techniques for generating position-coded products and processing data from such products.

### Background Art

It is known to print document pages together with a position-coding pattern that encodes unique absolute positions. WO 2004/038651 describes a system that allows a digital document to be printed in a superimposed relation to such a pattern on a substrate. The digital document is represented by a file which is stored in a repository. The pattern is subdivided into pattern pages of a predetermined size and location in the pattern. At the time of printing, a document file is selected from the repository, and a unique pattern page is allocated for each document page included in the document file. Positions may then be recorded from the printed document using a digital pen that reads and decodes the printed pattern. The recorded positions are received from the pen by a service handler that processes the positions in the context of the original document. This processing is based on a so-called PAD file that includes a mapping of processing rules to positions.

WO 2004/038651 also describes embodiments allowing a user to change the document at the time of printing, e.g. to change the mapping of processing rules to positions or to change the visual appearance of the document. This is achieved by storing an updated document file and an updated PAD file in a respective repository which can be accessed by the service handler in order to properly match the received positions to each printed instance of the originating document.

These embodiments of the known system are thus designed to generally handle changes made to an existing document at the time of printing. However, the system may be undesirably complex, since it involves several repositories and requires transfer of updated data for each printed instance.

Many conventional computer programs for printing a digital document (i.e. printing without superimposed pattern) provide an option to print multiple downscaled document pages on the same sheet of paper (so-called N-up printing). The benefits are multiple, since it saves paper, toner and may give a better overview of the document. There are other situations where it might be desirable to allow a user to change the format of a document page, e.g. with respect to its scale and/or rotation, at the time of printing. It would be attractive to introduce a less complex system to allow for this functionality in relation to the printing of position-coded documents.

WO2005/024623 describes a system for printing digital documents, wherein the format of the document page may be changed at the time of printing. According to this system, the position-coding pattern to be associated with the document page is allocated after the document has been scaled. However, this requires that the service handler, which is to process positions recorded from the printed document, is informed of the specific pattern allocated at the time of printing. Thus, the system of WO2005/024623 is complex and requires transfer of updated data for each printed instance.

### Summary of the Invention

It is an object of the invention to provide an alternative technique that allows printing of document pages together with coding pattern. More specifically, the invention aims at providing methods and apparatuses that allow for changes to be made to the original format of a document page at the time of printing.

It is also an object of the invention to provide such a technique that allows for a reduced system complexity, e.g. in terms of required data transfer and system components.

A further object of the invention is to provide a technique that may be combined with a conventional printing program that offers an option for N-up printing.

These and other objects, which will appear from the description below, are at least partly achieved by means of a method and apparatus for enabling superimposed printing, a method and apparatus for processing a position, a computer program and an electronic pen according to the independent claims, preferred embodiments being defined by the dependent claims.

According to a first aspect of the invention there is provided a method of enabling superimposed printing of a document page and one of a plurality of pattern units, each pattern unit representing a predetermined unique part of a position-coding pattern, said method comprising: retrieving a desired format of the document page in relation to an original format; accessing a data structure associating different pattern units within the plurality of pattern units with different formats, wherein the data structure identifies a set of primary pattern units, associates each primary pattern unit with one or more secondary pattern units, and associates each secondary pattern unit with one of said different formats, selecting said one pattern unit among the plurality of pattern units in the data structure based on the desired format, wherein said selecting comprises: identifying one primary pattern unit among the set of available primary pattern units; and selecting said one pattern unit among the secondary pattern units that are associated with the identified primary pattern unit; and providing an indication of the selected pattern unit.

According to a second aspect of the invention there is provided a method of processing a position originating from a product generated by printing a document page in superimposed relation to a pattern unit, said pattern unit representing a predetermined unique part of a position-coding pattern, wherein each document page has an original format and a number of predetermined printable formats, said method comprising: receiving the position; identifying one of a plurality of pattern units based on the received position; accessing a data structure associating different pattern units within said plurality of pattern units with different transformations, each transformation representing a format conversion between one of said printable formats and the original format, wherein said plurality of pattern units comprises a first set of primary pattern units and a second set of secondary pattern units and wherein said data structure associates each secondary pattern unit with one of said transformations and with at least one primary pattern unit, identifying a transformation associated with the identified pattern unit in the data structure; and indicating the identified transformation.

According to a third aspect of the invention there is provided a computer program comprising instructions for causing a computer to perform the method according to the first or second aspect.

According to a fourth aspect of the invention there is provided an apparatus for enabling superimposed printing of a document page and one of a plurality of pattern units, each pattern unit representing a predetermined unique part of a position-coding pattern, said apparatus comprising a processor having program instructions associated therewith, the program instructions being arranged to perform the method according to the first aspect.

According to a fifth aspect of the invention there is provided an apparatus for processing a position originating from a product generated by printing a document page in superimposed relation to a pattern unit, said pattern unit representing a predetermined unique part of a position-coding pattern, wherein each document page has an original format and a number of predetermined printable formats, said apparatus comprising a processor having program instructions associated therewith, the program instructions being arranged to perform the method according to the second aspect. This apparatus may be embodied as an electronic pen, or as a part of such an electronic pen.

Still other objectives, features, aspects and advantages of the present invention will appear from the following detailed disclosure, from the attached dependent claims as well as from the drawings.

### Brief Description of the Drawings

Embodiments of the invention will now be described in more detail with reference to the accompanying schematic drawings.
Fig. 1 is a view of a system for information capture and processing using a digital pen and a position-coded product.
Fig. 2A illustrates a part of an extensive position-coding pattern which is logically partitioned into pattern units.
Fig. 2B is a conceptual view of a position-coding pattern which encodes pattern units with identical x,y coordinates.
Fig. 3 is a view of a system for document production and position processing which allows the document format to be changed at the time of printing.
Fig. 4 illustrates a mapping of a document page to an allocated pattern area.
Fig. 5A illustrates logical links between an allocated pattern area and pattern units defined in the pattern.
Fig. 5B shows an example of a pattern definition data structure implementing a subset of the links in Fig. 5A.
Fig. 6A shows an example of a transformation data structure of a first type.
Fig. 6B illustrates the operation of a transformation function given by the data structure in Fig. 6A.
Fig. 7A shows an example of a transformation data structure of a second type.
Fig. 7B illustrates one operation of a transformation function given by the data structure in Fig. 7A.
Fig. 7C illustrates another operation of a transformation function given by the data structure in Fig. 7A.
Fig. 8A illustrates a pattern subdivision according to a first embodiment.
Fig. 8B shows an example of a product resulting from the first embodiment.
Fig. 9 illustrates a pattern subdivision according to a second embodiment.
Fig. 10A illustrates a pattern subdivision according to a third embodiment.
Fig. 10B shows an example of a product resulting from the third embodiment.
Fig. 11 illustrates a fictitiously continuous pattern created from the pattern pages of Fig. 2B.
Fig. 12 illustrates a variant of the pattern subdivision in Fig. 10A.
Fig. 13 illustrates a general method for enabling superimposed printing of document pages and pattern units.
Fig. 14 illustrates a general method for processing recorded positions.
Figs 15A-C illustrate different implementations of the method of Fig. 14 in a digital pen system.
Fig. 16 illustrates an apparatus that implements the method of Fig. 13.
Fig. 17 illustrates an apparatus that implements the method of Fig. 14.
Fig. 18 illustrates an alternative method for processing recorded positions.
Fig. 19 illustrates an apparatus that implements the method of Fig. 18.
Fig. 20 illustrates an exemplifying use of the method of Fig. 18 in a system for printing presentation pages.

### Detailed Description of Embodiments of the Invention

The following describes improvements in relation to systems and methods for enabling data capture from products provided with a position code.

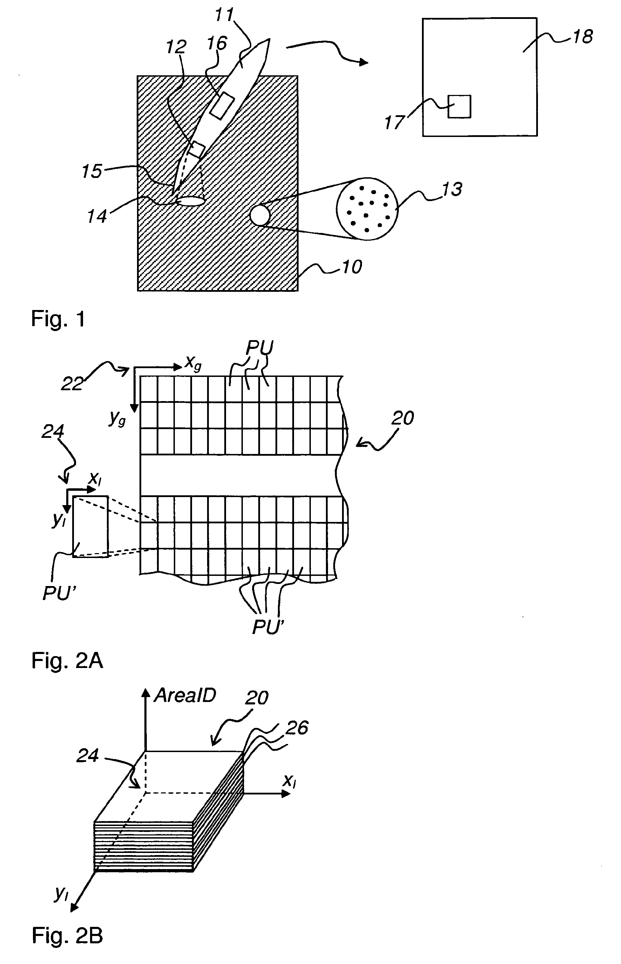

These types of systems and methods are based on the use of a position-coding pattern, i.e. a passive machine-readable pattern that can be applied to a substrate, typically a sheet substrate such as paper, to encode a plurality of unique positions on the surface of the substrate. As shown in Fig. 1, the positions can then be retrieved from the resulting position-coded product 10 by the use of a digital pen 11, which has an image sensor 12 for reading the pattern (shown enlarged in circle 13), typically from a region 14 on the product surface nearby a front-end tip 15 of the pen 11. By activating the image sensor 12 while the pen 11 is in contact with the product 10, sequences of positions (pen strokes) can be recorded to represent the pen's 11 movement on the product 10. In this way, an electronic representation of handwriting can be generated and processed, by a processing device 16 in the pen 11 or by a processing device 17 in an external apparatus 18 that receives recorded positions from the pen. The position-coded product 10 may also be used as an interface for operation control. For example, the pen 11 may be placed to read one or more positions from a certain part of the product 10, whereupon these position(s) causes the processing device 16, 17 to perform a certain function.

The position-coding pattern is suitably very large, so that different parts of the pattern can be applied to different products, or even to different copies (instances) of a product. Thereby, the encoded positions are unique to the originating product or product copy.

In one implementation, shown in Fig. 2A, the position-coding pattern 20 is embodied to encode a large number of unique positions, in a global x,y coordinate system 22 (x_{g},y_{g}). Thus, the position-coding pattern 20 represents a huge continuous surface of unique positions.

Fig. 2A also indicates that the huge pattern may be logically subdivided into pattern units PU with a predetermined size and location in the pattern 20. Different pattern units PU may or may not have different sizes. Each such pattern unit PU may be associated with a unique identifier (area ID). By providing the pen 11 or the external apparatus 18 (Fig. 1) with definition data that defines the pattern subdivision, the pen/external device 11, 18 is capable of identifying the relevant pattern unit PU from each recorded position. Certain pattern units PU' (or groups of pattern units), denoted pattern pages, may be associated with a local coordinate system 24 with a known origin on each pattern page, whereby a recorded position (in the global coordinate system 22) can be converted to a logical position given by an area ID (denoted page ID) and a local position (in the local coordinate system 24) of the pattern page PU' identified by the page ID. Such a coding pattern and a subdivision thereof are disclosed in US6663008 and US2003/0061188.

In another implementation, illustrated in Fig. 2B, the position-coding pattern 20 is embodied to encode a smaller number of unique positions, together with a set of unique identifiers (area IDs). Thereby, the position-coding pattern 20 represents a plurality of smaller continuous surfaces 26 of unique positions, each containing the same set of unique positions (in a local coordinate system 24) and each being distinguished by its area ID. This type of coding pattern is thus physically subdivided into pattern pages and directly encodes logical positions given by area ID and local positions. Such coding patterns are known from US6330976, US5661506 and US6766944.

The position-coded product 10 of Fig. 1 may be generated from a digital document, which includes one or more document pages. A document page typically includes human-understandable graphics, such as images or text, and has an original/standard format, i.e. a predefined extent.

The position-coded product may be generated by printing the digital document on a digital printer or digital press together with unique parts of the pattern, suitably by superimposing different document pages and different unique parts. Each document page may for example be printed together with one or more unique pattern units, or one or more subsets thereof. In one example, each document page is superimposed on a respective pattern unit or, if the pattern unit is larger than the document page, on a continuous subset thereof. In another example, separate subsets of a pattern unit are combined to be printed together with a specific document page.

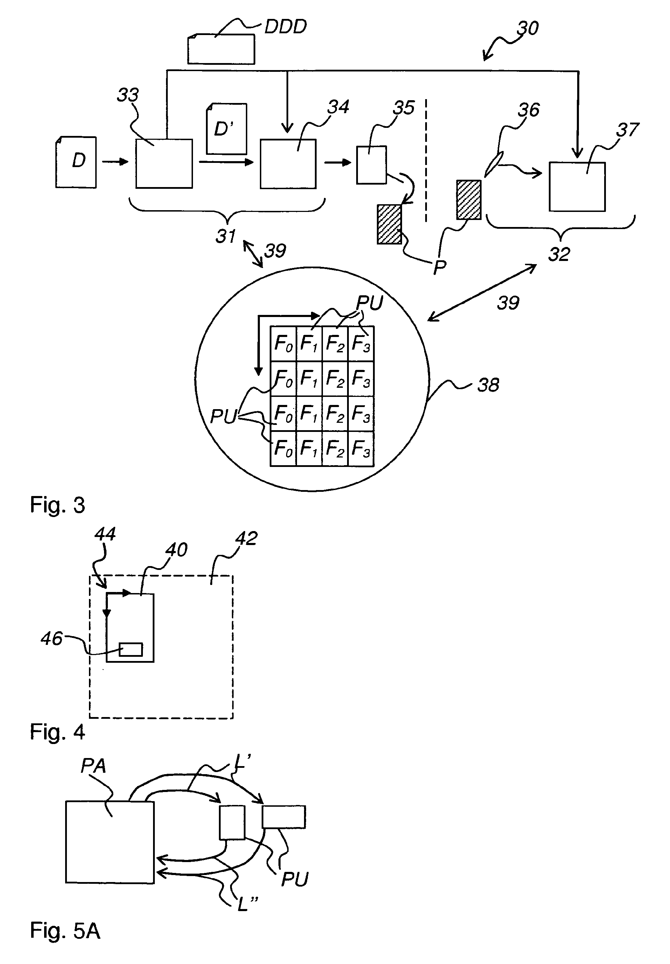

Fig. 3 shows a so-called digital pen and paper (DP&P) system 30 that implements the above principles. The system comprises a first part 31 for generating a tangible position-coded document P and a second part 32 for processing positions in relation to the tangible document P.

The generating part 31 of the system includes an activation module 33 and a printing module 34. The activation module 33 is designed to allocate one unique pattern area of the position-coding pattern for each document page of a digital document D, and to provide corresponding document design data DDD in the system. The digital document D is thereby "activated" with pattern, referred to as an activated document D' in the following. The document design data DDD may identify how each document page is mapped against the allocated pattern area, and may also identify different processing fields on each document page in relation to the pattern. These processing fields may guide the processing part 32 of the system to apply different processing rules to positions recorded from different parts of the document.

Fig. 4 illustrates one example of how a document page 40 may be mapped against an allocated pattern area 42. Each document page 40 may be associated with an application coordinate system 44 with a known origin on the document page 40, e.g. its upper left corner. Thus, there is a known relation between the encoded positions within the allocated area 42 and the coordinate system 44. This relation may be given by convention, or it may be indicated by the document design data DDD (Fig. 3). Thereby, a position recorded from the pattern can be mapped to a location in the coordinate system 44 of the document page 40. In Fig. 4, a processing field 46 is defined for the document page 40. This field 46 may be defined in either the coordinate system (global/logical) of the pattern or the application coordinate system 44.

From Fig. 4, it should be realized that the document design data DDD generated by the activation module 33 (Fig. 3) maps the allocated area 42 to the original format of the originating document page 40.

Returning to the system of Fig. 3, the printing module 34 allows the activated document D' to be printed together with pattern. The printing module 34 may use the document design data DDD to identify the allocated area for each document page to be printed and generate a printable representation thereof. The printing module 34 may then control a printer 35 to print each document page and the overlapping part of the allocated area on a substrate.

The activation module 33 and printing module 34 may be embodied on separate devices, which may or may not be operated by different users. For example, the activation module 33 may be operated by one user to generate activated documents D', which are subsequently stored in a repository (not shown). Another user may operate one of a plurality of printing modules 34 to select an activated document D' from the repository, and print one or more of its document pages together with pattern. Alternatively, the activation module 33 and the printing module 34 may be combined in a single tool, which is operated by a single user to both activate and print a digital document D.

The position processing part 32 of the DP&P system 30 in Fig. 3 includes a digital pen 36 for recording positions from the printed document P, and an application module 37 for receiving and processing the recorded positions. The application module 37 may, e.g., correlate the received positions to a specific document and to associated processing fields (cf. field 46 in Fig. 4). The application module 37 may then operate dedicated processing instructions on the recorded position that falls within such a processing field. Alternatively or additionally, the application module 37 may display an image of pen strokes formed by the recorded positions against an image of the originating document page.

The application module 37 may use the document design data DDD, or a derivative thereof, to identify the originating document and the associated processing instructions. Alternatively, the application module 37 may have been designed based on the document design data DDD, to exclusively process positions originating from a specific document when printed with pattern.

In either case, the application module 37 is designed to map the recorded positions against the original format of the document pages of the originating document.

It might be desirable to allow a user of the DP&P system 30 to change the format of the document page, typically at the time of printing. Thus, while operating the printing module 34, a user may want to print the activated document D' with the document pages in A3 format instead of an original A4 format, or to print the document with N document pages on each sheet of paper instead of 1 document page per sheet of paper ("N-up printing"). Such a change affects the mapping between recorded positions and document page. Consequently, corresponding transformation data should be made available to the application module 37. Thereby, the application module 37 can modify either the received positions or the document design data, to retain a correct mapping between encoded positions and document page.

A straightforward solution would be to simply transfer the transformation data from the printing module 34 to the application module 37. However, the introduction of such a transfer mechanism would lead to an increased complexity of the system 30. For example, it may require additional communication interfaces/devices in both the printing module 34 and the application module 37. It may also be necessary to transfer the transformation data to the pen 36 as well, in order for a processing device in the pen to be able to initiate proper feedback to the pen user based on the recorded positions, e.g. via a built-in MMI (Man Machine Interface) such as a display, LED, vibrator, speaker. For example, the pen 36 might be configured to vibrate when placed in a specific field on a printed document page P.

Further below, different embodiments will be described that reduce the need to transmit transformation data in a DP&P system. All of these embodiments implement the general idea of using the position-coding pattern to indicate a format transformation of the originating document page. As indicated at 38 in Fig. 3, the position-coding pattern, or at least part thereof, is subdivided into predetermined units PU, and each such unit is associated with a predetermined format F₀-F₃. Knowledge about the pattern subdivision and its association with different formats is distributed within the DP&P system, and specifically it is shared between the generating part 31 and the position processing part 32 of the system, as schematically indicated by arrows 39 in Fig. 3. At the time of printing a document page, a user is able to select between different printing options, corresponding to different formats of the printed document page. The document page is then printed together with a pattern unit PU that is associated with the format change that was selected by the user. Thus, the positions encoded on the printed document page will indicate a format change to any processing device in the system having knowledge about the pattern subdivision and its association with different formats. This processing device may then modify the recorded positions or the document design data, to retain a correct mapping between positions and document page. Alternatively, the processing device may indicate the format change to another processing device that makes the final modification.

If the activated document D' contains more than one document page, the position processing part 32 also needs to be able to identify the document page from the recorded positions. This could be achieved by configuring the printing module 34 to output association data that associates the selected pattern unit PU with the document page. This association data may then be made available to the above-mentioned processing device.

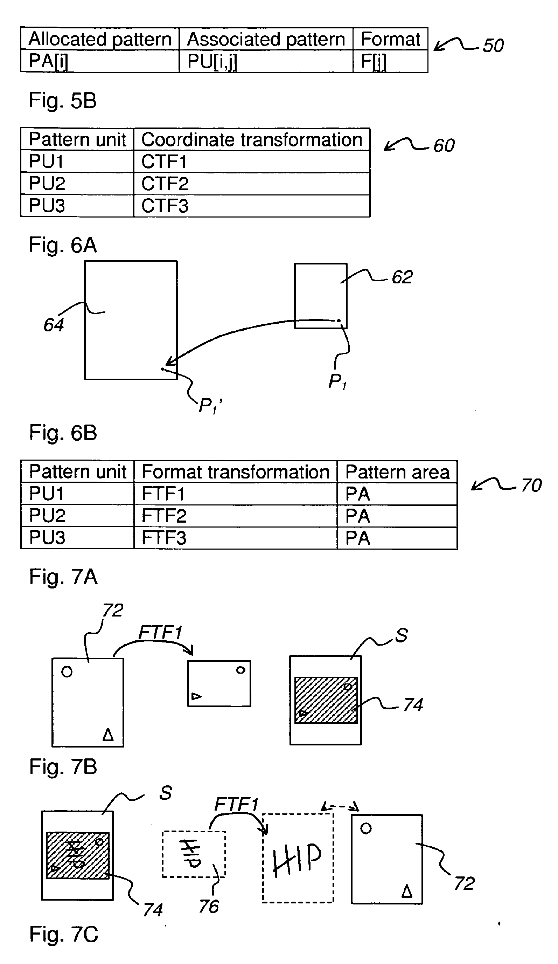

However, in order to minimize the need for data transfer between the printing module 34 and the position processing part 32 of the DP&P system, the association is preferably inherent to the pattern unit PU. As indicated in Fig. 5A, this can be achieved by creating predefined logical associations or links L' between the pattern areas PA that are available to be allocated by the activation module 33 and the pattern units PU that are available for printing. As shown in Fig. 5B, these links may be implemented in a pattern definition data structure 50, which also identifies a format F for each pattern unit PU.

A pattern unit PU is thus selected for printing from the pattern definition data structure 50 as a function of both the intended format F of the printed document page and the pattern area PA allocated to the document page by the activation module 33.

Fig. 5A also indicates the provision of links L" between the pattern units PU and the allocated area PA. These links may be implemented by a transformation data structure, which is available to the position processing part 32.

Fig. 6A indicates a first type of transformation data structure 60 that associates different pattern units PU1-PU3 with a respective coordinate transformation function CTF1-CTF3. As illustrated in Fig. 6B, such a coordinate transformation function operates to transfer a position P1 on the relevant pattern unit 62 to a corresponding position P1' on an allocated area 64, which is implicitly or explicitly indicated by the document design data to be printed with a document page in original format.

Fig. 7A indicates a second type of data structure 70 that associates different pattern units PU1-PU3 with a respective format transformation function FTF1-FTF3, as well as an allocated area PA (cf. link L" in Fig. 5A). In one implementation, illustrated in Fig. 7B, the format transformation function can be designed to operate on the original document page 72 so as to match it to the format of the document page 74 as printed on a substrate S. In another implementation, illustrated in Fig. 7C, the format transformation function is designed to operate on the recorded positions 76 (illustrated by "HIP" written with the digital pen on the printed document page 74), to match them to the format of the original document page 72. In both of these implementations, the original document page 72 for a position falling within a particular pattern unit may be identified from the document design data, which in turn may be identified based on the allocated area indicated by the data structure 70.

All of these transformation functions may be designed to operate on either global positions or logical positions, depending on what kind of positions are used in the system.

In all of the above data structures, pattern units/areas may be indicated by an area ID and/or by one or more x,y coordinate pairs. The data structures may be implemented as a look-up table, a database or any other structured collection of records.

### Embodiment 1

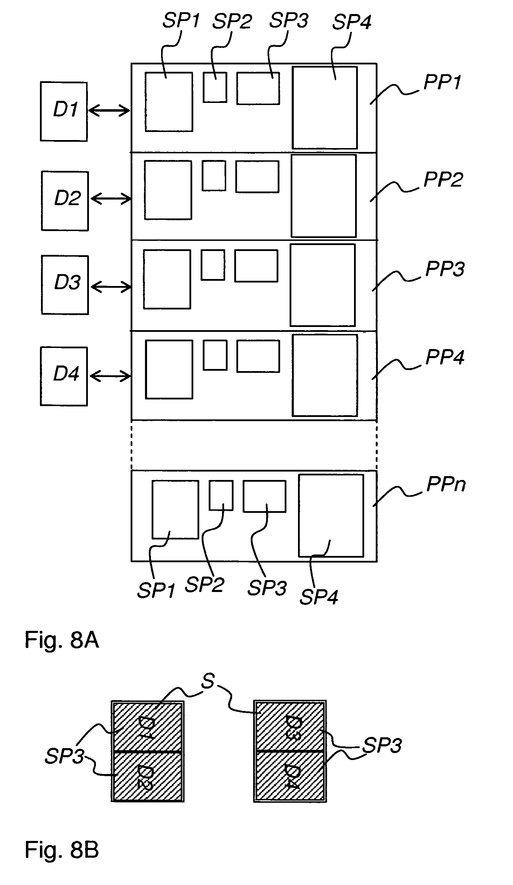

Fig. 8A illustrates a first embodiment in which the position-coding pattern is subdivided into a plurality of primary pattern units PP1-PPn, each including a plurality of secondary pattern units SP1-SP4. Within a primary pattern unit PP1-PPn, the secondary pattern units SP1-SP4 are associated with different formats. Each primary pattern unit PP1-PPn includes a secondary pattern unit SP1 which is associated with an original document format.

When a document is activated in the system, via the activation module 33 (Fig. 3), each document page is associated with a respective primary pattern unit PP1-PPn. By convention, the document design data is created to map each document page against the secondary pattern unit SP1 that represents the original format.

Fig. 8A also indicates a document after activation, wherein its document pages D1-D4 have been associated with a respective primary pattern unit PP1-PP4.

Before printing a document page of an activated document, the printing module 34 (Fig. 3) gives a user the option of selecting a different format for the document page. The available formats correspond to the different formats that are associated with the pattern. Thus, the printing module 34 has access to a pattern definition data structure (cf. 50 in Fig. 5B) that associates different secondary pattern units SP1-SP4 with different formats. If the user chooses a different format, the printing module causes the document page to be printed together with the secondary pattern unit SP1-SP4 that is associated with the chosen format via the pattern definition data structure.

As an example of such formats, secondary pattern unit SP1 may be associated with a predetermined original format (e.g. A4), secondary pattern unit SP2 may be associated with a predetermined down-scaling to 50% of the original format, secondary pattern unit SP3 may be associated with a predetermined downscaling to 70.7% (1/√2) and a 90° right-hand rotation of the original format, and secondary pattern unit SP4 may be associated with a predetermined up-scaling to 141% (√2) of the original format.

Fig. 8B illustrates the resulting product when the printing module has been operated to print the document pages D1-D4 with two document pages on each substrate S. Thus, each downscaled document page D1-D4 is printed together with a respective secondary pattern unit SP3.

The above-mentioned transformation data structure 60, 70 may associate the different secondary pattern units SP1-SP4 with transformation data (first or second type) that allows the position processing part 32 of the DP&P system to apply the correct mapping between recorded positions and document page. For example, the transformation data structure 60, 70 may associate area IDs of secondary pattern units SP2-SP4 with transformation data, whereas the document design data may associate area IDs of primary pattern units PP1-PP4 with document pages D1-D4. In another variant, each primary pattern unit PP1-PP4 is defined as a pattern page, which thus is associated with a local coordinate system (24 in Fig. 2). The secondary pattern units SP1-SP4 may then be defined in local positions within the primary pattern unit PP1-PP4.

Thus, by mapping a recorded position to a definition of secondary pattern units SP1-SP4, appropriate transformation data is derived, and by mapping the recorded position to a definition of primary pattern units PP1-PP4, the associated document page D1-D4 is derived.

### Embodiment 2

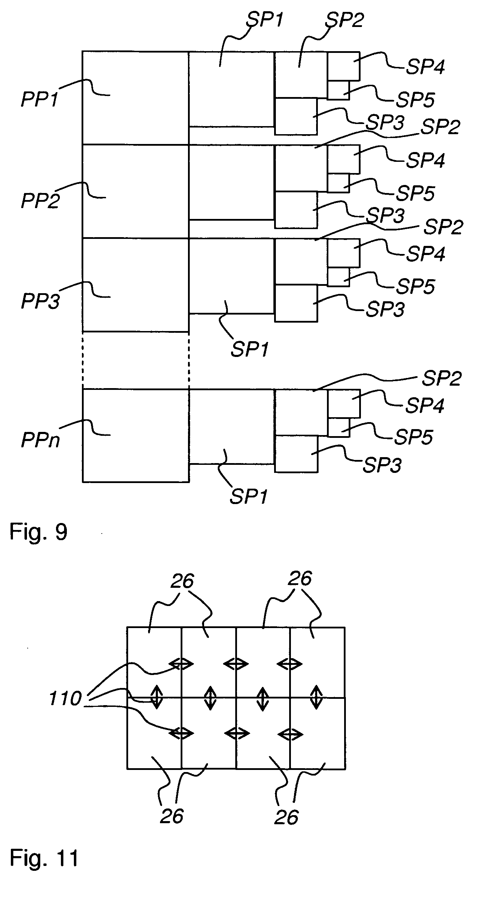

Fig. 9 illustrates a second embodiment in which the position-coding pattern is subdivided into a plurality of primary pattern units PP1-PPn. Each primary pattern unit PP1-PPn represents an original document format and is associated with a plurality of secondary pattern units SP1-SP5, each representing a predetermined different document format. Each primary pattern unit PP1-PPn has its own set of secondary pattern units SP1-SP5. Thus, the subdivision defines a set of available formats to be used when printing a document page together with pattern.

When a document is activated in the system, each document page is associated with a respective primary pattern unit PP1-PPn. Thus, the document design data (DDD in Fig. 3) is created to map each document page against its associated primary pattern unit PP1-PPn.

The printing module 34 has access to a pattern definition data structure (cf. 50 in Fig. 5B) that associates each primary pattern unit PP1-PPn with a set of secondary pattern units SP1-SP5, each being associated with a respective format. The printing module 34 allows a document page to be printed in any one of the formats that are available in the pattern definition data structure. When a format change is requested, the printing module 34 accesses the pattern definition data structure using the desired format and the primary pattern unit PP1-PPn associated with the document page, to identify the appropriate secondary pattern unit SP1-SP5. The printing module then causes the document page to be printed together with this secondary pattern unit SP1-SP5.

Like in the first embodiment, the above-mentioned transformation data structure 60, 70 may associate the different secondary pattern units SP1-SP5 with transformation data (first or second type) that allows the position processing part 32 of the DP&P system to apply the correct mapping between recorded positions and document page.

Thus, by mapping the recorded position to a definition of secondary pattern units SP1-SP5, appropriate transformation data is derived, and by mapping the recorded position to a definition of primary pattern units PP1-PPn, the associated document page is derived (via the document design data DDD).

Similarly to the first embodiment, the second embodiment allows multiple document pages to be printed on one substrate, by different secondary pattern units SP1-SP5 being printed side-by-side in superimposed relation to a respective document page (cf. Fig 8B).

As explained in relation to Fig. 1, the digital pen 11 typically records an image of the product surface from a region 14 nearby the pen tip 15. Thus, positions are decoded from a region slightly offset from the pen tip 15. It is possible to configure the pen's processing device 16 to compensate for this offset, using information about the offset, the momentary orientation of the pen and the configuration of the pattern, so as to calculate the position that would have been decoded at the momentary location of the pen tip 15. When separate parts of the pattern are tiled on one sheet, like in Fig. 8B, the pen 11 might not operate properly at the juncture of the two parts. Because of the offset, the pen tip 15 may be in one part, while the image sensor 12 looks at the other part. Therefore, a margin without pattern may be needed at the juncture.

### Embodiment 3

The third embodiment provides the additional advantage of eliminating the need for a margin when printing multiple document pages on one substrate.

Generally speaking, this is accomplished by a suitable pattern subdivision, in which secondary pattern units linked to different primary pattern units are grouped side-by-side on a continuous part of the pattern. This part is continuous in the sense that the pen, when placed with its image sensor looking at one secondary pattern unit, is able to identify the position of the pen tip, even if the pen tip is placed in another secondary pattern unit.

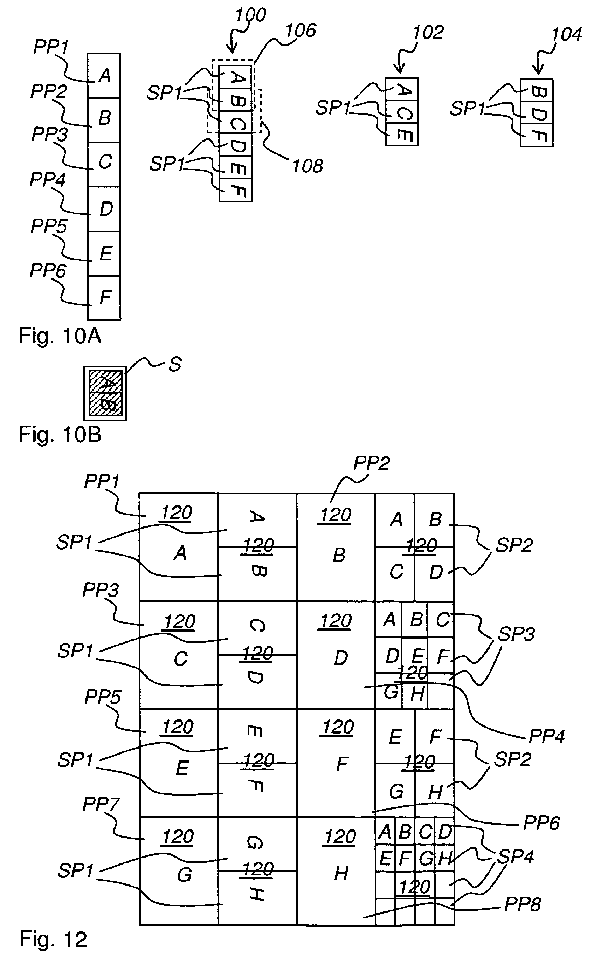

An example of such a pattern subdivision is given in Fig. 10A, which is a modification of the second embodiment. Like in the second embodiment, the pattern is divided into a set of primary pattern units PP1-PP6, representing an original format, and one or more associated secondary pattern units SP1 representing a predetermined different format. These secondary pattern units are arranged side-by-side or tiled in one or more groups 100-104 in the pattern. As in the second embodiment, the primary pattern units PP1-PP6 are allocated to document pages by the activation module 33 (Fig. 3). In this example, each primary pattern unit PP1-PP6 is associated with a secondary pattern unit SP1 that represents a predetermined downscaling to 70.7% (1/√2) and a 90° right-hand rotation. The association and the format change between primary and secondary pattern units are illustrated by a respective letter A-F in Fig. 10A.

The pattern subdivision of Fig. 10A makes it possible to print two adjacent secondary pattern units, e.g. within dotted boxes 106 or 108, without an intermediary margin on a substrate S. The result of printing the secondary pattern units within dotted box 106 is shown in Fig. 10B. This may e.g. be used for printing two consecutive document pages with A4 original format on an A4-sized substrate. Since a continuous part of the pattern is printed on the substrate, the pen will be able to correctly calculate the location of the pen tip.

Clearly, group 100 is designed to improve printing of consecutive document pages on one substrate. Fig. 10A also illustrates further predefined groups 102, 104 of adjacent secondary pattern units, which are designed to improve printing of other combinations of document pages on one substrate.

It should be noted that the continuous part may be spatially continuous or logically continuous. A spatially continuous part is a coherent part of the actual pattern, defined by an area ID or one or more pairs of global or logical coordinates (x,y). A logically continuous part includes a combination of separate subsets of the pattern that are logically associated by the pen. For example, if the pattern is made up of a plurality of "hard coded" pattern pages 26, as in Fig. 2B, the pen may store logic that links at least part of these pattern pages 26 in a given geometric arrangement so as to create a fictitiously continuous pattern, as indicated in Fig. 11 (with links indicated by arrows 110).

Although the secondary pattern units SP1 in Fig. 10A are all associated with one and the same format, it is possible to define groups that includes secondary pattern units associated with different formats.

Fig. 12 illustrates a variation of the third embodiment, in which the coding pattern is subdivided into identical pattern pages 120, which are tiled in the pattern. Each pattern page 120 represents either a primary pattern unit PP1-PPn or a group of secondary pattern units SP1-SP4. The association and the format change between primary and secondary pattern units are illustrated by a respective letter A-H in Fig. 12.

Within each group, the secondary pattern units SP1-SP4 are tiled across the pattern page 120. Since a pattern page 120, by definition, is spatially continuous, combinations of secondary pattern units can be printed on a substrate without the need for an intermediate margin.

In the example of Fig. 12, both primary pattern units and groups are of the same size in the pattern space, which may facilitate the conversion from positions to pattern units, and vice versa. It is also a convenient way to capitalize on the provision of pattern pages.

### General

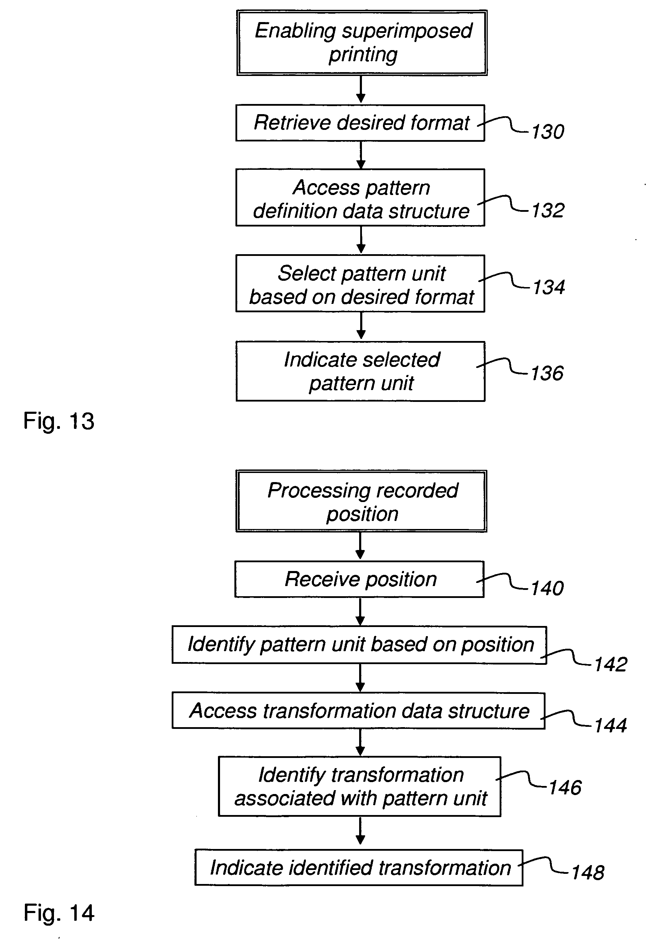

The above embodiments implement a method of enabling superimposed printing of a document page and one of a plurality of pattern units, as shown in Fig. 13. The method generally involves retrieving a desired format of the document page in relation to an original format (step 130), accessing a pattern definition data structure associating different pattern units within the plurality of pattern units with different formats (step 132); selecting one pattern unit among the plurality of pattern units in the data structure based on the desired format (134); and providing an indication of the selected pattern unit (step 136).

In this context, the superimposed printing implies that at least part of the document page is printed in alignment with the pattern unit, or one or more parts thereof. The document page and the pattern unit may be printed as two separate layers of printing ink, one on top of the other, on a substrate. Alternatively, as disclosed in US 2007/0075151, the document page and the pattern unit may be created by a single layer of printing ink on a substrate.

The above embodiments also implement a method, shown in Fig. 14, of processing a position originating from a product generated by printing a document page in superimposed relation to a pattern unit, wherein each document page has an original format and a number of predetermined printable formats. The method generally involves receiving the position (step 140); identifying one of a plurality of pattern units based on the received position (step 142); accessing a transformation data structure associating different pattern units within said plurality of pattern units with different transformations, each transformation representing a format conversion between one of the printable formats and the original format (step 144); identifying a transformation associated with the identified pattern unit in the data structure (step 146); and indicating the identified transformation (step 148).

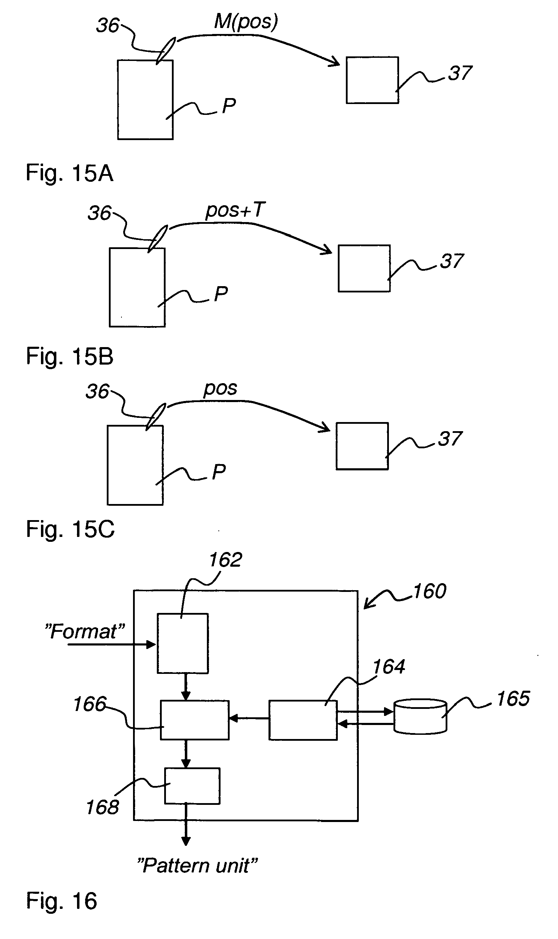

Figs 15A-15C illustrate different ways of implementing the method of Fig. 14 within the position processing part 32 of the system 30 shown in Fig. 3.

In Fig. 15A, the pen 36 records positions from the position-coded document P, identifies the transformation from the recorded positions, modifies the recorded positions correspondingly, and transfers the modified positions M(pos) to the application module 37. Here, the format change is hidden from the application module 37, which can process the received positions as if there were no format change. Furthermore, if required, the pen 36 can provide stand-alone feedback to the pen user based on the modified positions.

In Fig. 15B, the pen 36 records positions from the position-coded document P, detects the transformation from the recorded positions, and transfers the recorded positions together with format indicating data T to the application module 37. The application module 37 is then able to modify the received positions, or the corresponding document design data, based on the format indicating data.

In Fig. 15C, the pen 36 records positions, and transfers the recorded positions to the application module 37. The application module 37 detects the transformation from the received positions, and modifies the received positions, or the corresponding document design data, based on the identified format change.

In one further variant, not shown on the drawings, the application module 37 is incorporated as part of the digital pen 36.

The above method of enabling superimposed printing may be embodied in an apparatus 160 as shown in Fig. 16. The apparatus comprises means 162 for retrieving a desired format of the document page in relation to an original format; means 164 for accessing a pattern definition data structure 165 associating different pattern units within the plurality of pattern units with different formats; means 166 for selecting said one pattern unit among the plurality of pattern pages in the pattern definition data structure 165 based on the desired format; and means 168 for providing an indication of the selected pattern unit.

The skilled person realizes that this apparatus could be combined with a conventional printing program that provides an option for N-up printing, such that the desired format is given by a specific selection of N-up printing, such as 2, 4, 6 or 9 document pages per substrate.

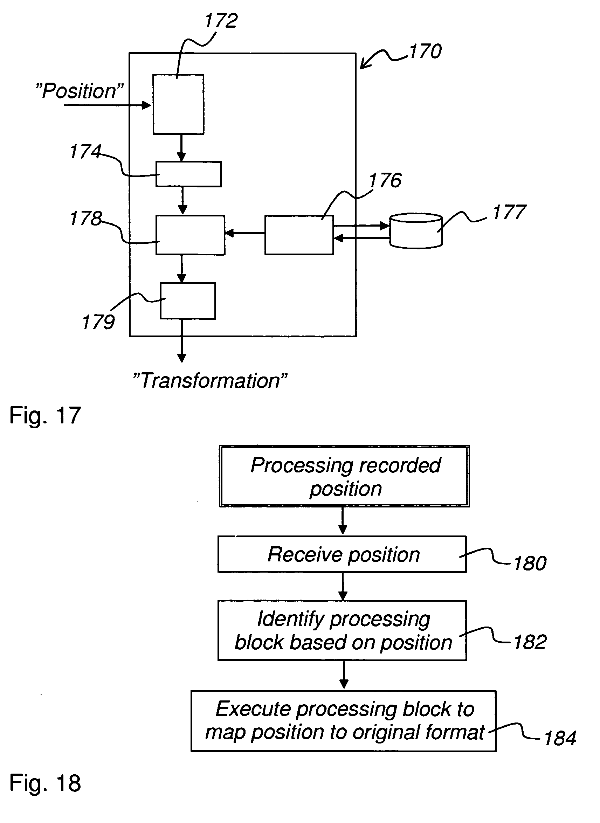

The above method of processing a position may be embodied in an apparatus 170 as shown in Fig. 17. The apparatus comprises means 172 for receiving the position; means 174 for identifying one of a plurality of pattern units based on the position; means 176 for accessing a transformation data structure 177 associating different pattern units within said plurality of pattern units with different transformations, each transformation representing a format conversion between one of the printable formats and the original format; means 178 for identifying a transformation associated with the identified pattern unit in the transformation data structure; and means 179 for indicating the transformation.

An alternative to using a transformation data structure for identifying a transformation for a received position, is to design the application module (37 in Fig. 3) based on the pattern subdivision and its association with different printable formats. In other words, the application module is constructed to correctly match each received position to the original format. For example, the application module may comprise dedicated processing blocks for different pattern units, where each processing block is designed to implement a transformation between a specific printed format and the original format. Thus, based on a received position, the application module is able to identify and execute a proper processing block which maps the received position to the original format or, equivalently, to the printed format of the document page. In one specific embodiment, each processing block is implemented as a dedicated set of software instructions.

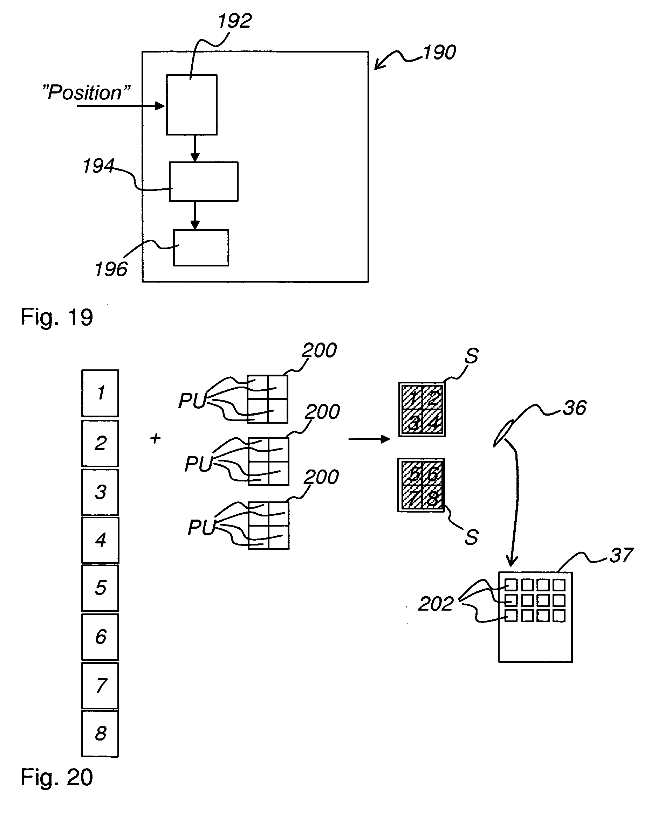

Thus, the above embodiments also implement a method, shown in Fig. 18, of processing a position originating from a product generated by printing a document page in superimposed relation to a pattern unit, wherein each document page has an original format and a number of predetermined printable formats. The method generally involves receiving the position (step 180); identifying one of a plurality of dedicated processing blocks based on the received position, each processing block representing a one of the printable formats (step 182); and executing the identified processing block so as to map the received position to the original format (step 184). This method may be embodied in an apparatus 190 as shown in Fig. 19. The apparatus comprises means 192 for receiving the position; means 194 for identifying one of a plurality of dedicated processing blocks based on the received position, each processing block representing one of the printable formats; and means 196 for executing the processing block so as to map the received position to the original format.

To further exemplify this method and apparatus, consider a presentation application which is designed to display an originating presentation page together with positions recorded by a digital pen from a position-coded printout of the presentation page. The recorded positions may be displayed as a pointer location or as handwriting. A specific example is shown in Fig. 20. The generation of the printout is based on a pattern data structure that includes a set of predefined templates 200, each including a known combination of known pattern units PU and known formats. Fig. 20 illustrates three individual templates 200 that each allows printing of 4 presentation pages (originally e.g. in A4 format) on a single substrate (e.g. in A4 format). Each such template 200 includes unique pattern units PU, which may or may not be arranged side-by-side in a continuous part of the pattern (see e.g. Fig. 12). Fig. 20 also illustrates the result of printing eight presentation pages (indicated by numerals 1-8) on two substrates S, in which each presentation page is down-scaled and superimposed on a respective pattern unit. The printing also results in document design data that identifies the presentation pages. The mapping of presentation pages to pattern units may be explicitly identified in the design data, or it may be implicitly given by a known ordering of presentation pages and a known ordering of templates/pattern units. Positions recorded by a digital pen 36 on the printout(s) are received by the presentation application 37, which associates different instruction sets 202 with different pattern units. Upon receipt of a position, the application 37 identifies the relevant presentation page (using the design data) and the appropriate instruction set. By executing the identified instruction set, the application 37 is able to transform the position to match the original format, so that it can be displayed together with the originating presentation page.

Each of the above apparatuses as shown in Figs 16, 17 and 19 may be implemented by special-purpose software (or firmware) run on one or more general-purpose or special-purpose computing devices. In this context, it is to be understood that each "means" of such an apparatus refers to a conceptual equivalent of a method step; there is not always a one-to-one correspondence between means and particular pieces of hardware or software routines. One piece of hardware sometimes comprises different means. For example, a processing unit serves as one means when executing one instruction, but serves as another means when executing another instruction. In addition, one means may be implemented by one instruction in some cases, but by a plurality of instructions in some other cases.

Such a software-controlled computing device may include one or more processing units, e.g. a CPU ("Central Processing Unit"), a DSP ("Digital Signal Processor"), an ASIC ("Application-Specific Integrated Circuit"), discrete analog and/or digital components, or some other programmable logical device, such as an FPGA ("Field Programmable Gate Array"). The computing device may further include a system memory and a system bus that couples various system components including the system memory to the processing unit. The system bus may be any of several types of bus structures including a memory bus or memory controller, a peripheral bus, and a local bus using any of a variety of bus architectures. The system memory may include computer storage media in the form of volatile and/or non-volatile memory such as read only memory (ROM), random access memory (RAM) and flash memory. The special-purpose software may be stored in the system memory, or on other removable/non-removable volatile/non-volatile computer storage media which is included in or accessible to the computing device, such as magnetic media, optical media, flash memory cards, digital tape, solid state RAM, solid state ROM, etc. The computing device may include one or more communication interfaces, such as a serial interface, a parallel interface, a USB interface, a wireless interface, a network adapter, etc. One or more I/O devices may be connected to the computing device, via a communication interface, including e.g. a keyboard, a mouse, a touch screen, a display, a printer, a disk drive, etc.

The special-purpose software may be provided to the computing device on any suitable computer-readable medium, including a record medium, a read-only memory, or an electrical carrier signal.

Alternatively, one or more of the above apparatuses may be exclusively implemented by dedicated hardware, such as a special-purpose integrated circuit, or a combination of discrete analog and/or digital components.

In the above embodiments, it may be advantageous to design the pattern subdivision so as to minimize the spacing between pattern units, in order to economize with the available pattern. This may involve optimising both size and placement of the pattern units. For example, the secondary pattern units may be given a size that reflects the associated format change. Thus, the size of a pattern unit that is associated with a format change from A4 to A5 may be 70% of the size of the pattern unit associated with the original format (A4).

Alternatively, the pattern subdivision may be designed to optimise processing efficiency with respect to, e.g., the identification or referencing of pattern units or the transformation of recorded positions.

It is to be understood that the subdivision of the pattern may be designed to allow for any type of format conversion, be it between standardized or non-standardized formats. Such standard formats may include any format defined by the ISO paper sizes (e.g. A, B or C series) or the North American paper formats "Letter", "Legal", "Executive", "Ledger/Tabloid", etc.

The invention has mainly been described above with reference to a few embodiments. However, as is readily appreciated by a person skilled in the art, other embodiments than the ones disclosed above are equally possible within the scope and spirit of the invention, which is defined and limited only by the appended patent claims.

For example, the pattern definition data structure need not associate pattern units with absolute formats. Instead, it could associate pattern units with relative formats, i.e. format changes (e.g. scale and rotation) with respect to a standard format. The standard format need not be predetermined for a pattern unit. Instead, the standard format may be set when pattern is allocated to a document page (i.e. in the activation module). For example, consider a digital document page which is defined in Letter format. The activation module allocates one of a plurality of primary pattern pages to this document page, and indicates the original format in the document design data (DDD). All primary pattern pages have a size of 50 cm x 50 cm to accommodate for many different original formats. In the printing module, the user chooses to print the document page in A4 format instead. The printing module then causes the document to be printed together with pattern from a secondary pattern unit which represents a 3% decrease in scale. Later, the position processing part of the system is able to apply a corresponding re-scaling to either the recorded positions or the original document format.

It is also possible to accommodate for format changes that affects the layout of the document page(s), i.e. the relative placement of human-understandable elements and/or processing fields. Such format changes include changes to shape, typically aspect ratio, such as from "Portrait" to "Landscape". As long as the resulting layout changes are predictable, they can be accounted for in the transformation data structure, such that the layout of the original document page can be recreated by the position processing part of the DP&P system.

## Claims

1. Method of enabling superimposed printing of a document page (40) and one of a plurality of pattern units (PU), each pattern unit (PU) representing a predetermined unique part of a position-coding pattern (20), said method comprising:
retrieving (130) a desired format of the document page (40) in relation to an original format;
accessing (132) a data structure (50) associating different pattern units within the plurality of pattern units (PU) with different formats, wherein the data structure (50) identifies a set of primary pattern units (PP1-PPn), associates each primary pattern unit (PP1-PPn) with one or more secondary pattern units (SP1-SP5), and associates each secondary pattern unit (SP1-SP5) with one of said different formats;
selecting (134) said one pattern unit among the plurality of pattern units (PU) in the data structure (50) based on the desired format, wherein said selecting comprises: identifying one primary pattern unit among the set of available primary pattern units (PP1-PPn); and selecting said one pattern unit among the secondary pattern units (SP1-SP5) that are associated with the identified primary pattern unit; and
providing (136) an indication of the selected pattern unit.

2. The method of claim 1, wherein, in said data structure (50), each secondary pattern unit (SP1-SP5) is uniquely associated with one primary pattern unit (PP1-PPn).

3. The method of claim 1 or 2, wherein groups (100-104) of secondary pattern units (SP1) are defmed in a continuous part of the pattern, the secondary pattern units (SP1) of each group (100-104) being arranged side-by side and being associated with different primary pattern units (PP1-PPn).

4. The method of claim 3, wherein all secondary pattern units (SP1) within the group (100-104) are associated with the same format.

5. The method of any preceding claim, wherein each of said formats represents a change in at least one of a scale, an orientation and a shape with respect to the original format.

6. The method of any preceding claim, further comprising: generating a printable representation of the visual appearance of the document page (40) in said desired format, and generating a printable representation of the visual appearance of at least a subset of the selected pattern unit.

7. Method of processing a position originating from a product generated by printing a document page (40) in superimposed relation to a pattern unit (PU), said pattern unit (PU) representing a predetermined unique part of a position-coding pattern (20), wherein each document page (40) has an original format and a number of predetermined printable formats, said method comprising:
receiving (140) the position; and
identifying (142) one of a plurality of pattern units (PU) based on the received position;
**characterised in that** the method further comprises:
accessing (144) a data structure (60; 70) associating different pattern units within said plurality of pattern units (PU) with different transformations, each transformation representing a format conversion between one of said printable formats and the original format, wherein said plurality of pattern units (PU) comprises a first set of primary pattern units (PP1-PPn) and a second set of secondary pattern units (SP1-SP5) and wherein said data structure (60; 70) associates each secondary pattern unit (SP1-SP5) with one of said transformations and with at least one primary pattern unit (PP1-PPn);
identifying (146) a transformation associated with the identified pattern unit in the data structure (60; 70); and
indicating (148) the identified transformation.

8. The method of claim 7, wherein each transformation converts a position within the associated secondary pattern unit (SP1-SP5) to a position within the associated primary pattern unit (PP1-PPn).

9. The method of claim 7 or 8, said method further comprising applying the identified transformation to the received position.

10. The method of claim 7 or 8, further comprising identifying said document page (40) based on the received position, and applying the identified transformation to said document page (40).

11. A computer program comprising instructions for causing a computer to perform the method of any one of claims 1-10.

12. An apparatus for enabling superimposed printing of a document page (40) and one of a plurality of pattern units (PU), each pattern unit (PU) representing a predetermined unique part of a position-coding pattern (20), said apparatus (160) comprising a processor having program instructions associated therewith, the program instructions being arranged to perform the method of any one of claims 1-6.

13. An apparatus for processing a position originating from a product generated by printing a document page (40) in superimposed relation to a pattern unit (PU), said pattern unit (PU) representing a predetermined unique part of a position-coding pattern (20), wherein each document page (40) has an original format and a number of predetermined printable formats, said apparatus (170) comprising a processor having program instructions associated therewith, the program instructions being arranged to perform the method of any one of claims 7-10.

## Patentansprüche

1. Verfahren, um einen Übereinanderdruck einer Dokumentenseite (40) und eine von mehreren Mustereinheiten (PU) zu aktivieren, wobei jede Mustereinheit (PU) einen vorgegebenen eindeutigen Teil eines Positions-Codierungsmusters (20) darstellt, wobei das Verfahren Folgendes umfasst:
Wiedergewinnen (130) eines gewünschten Formats der Dokumentenseite (40) in Beziehung zu einem Ursprungsformat;
Zugreifen (132) auf eine Datenstruktur (50), die verschiedene Mustereinheiten innerhalb der mehreren Mustereinheiten (PU) verschiedenen Formaten zuordnet, wobei die Datenstruktur (50) einen Satz von primären Mustereinheiten (PP1-PPn) identifiziert, jede primäre Mustereinheit (PP1-PPn) einer oder mehreren sekundären Mustereinheiten (SP1-SP5) zuordnet und jede sekundäre Mustereinheit (SP1-SP5) einem der verschiedenen Formate zuordnet;
Auswählen (134) der einen Mustereinheit unter den mehreren Mustereinheiten (PU) in der Datenstruktur (50) auf der Grundlage des gewünschten Formats, wobei das Auswählen umfasst: Identifizieren einer primären Mustereinheit unter dem Satz von verfügbaren, primären Mustereinheiten (PP1-PPn); und Auswählen der einen Mustereinheit unter den sekundären Mustereinheiten (SP1-SP5), die der identifizierten primären Mustereinheit zugeordnet sind; und
Bereitstellen (136) einer Anzeige der ausgewählten Mustereinheit.

2. Verfahren nach Anspruch 1, wobei in der Datenstruktur (50) jede sekundäre Mustereinheit (SP1-SP5) eindeutig einer primären Mustereinheit (PP1-PPn) zugeordnet ist.

3. Verfahren nach Anspruch 1 oder 2, wobei Gruppen (100-104) der sekundären Mustereinheiten (SP1) in einem kontinuierlichen Teil des Musters definiert sind, wobei die sekundären Mustereinheiten (SP1) jeder Gruppe (100-104) nebeneinander angeordnet sind und mit verschiedenen primären Mustereinheiten (PP1-PPn) verbunden sind.

4. Verfahren nach Anspruch 3, wobei alle sekundären Mustereinheiten (SP1) innerhalb der Gruppe (100-104) demselben Format zugeordnet sind.

5. Verfahren nach einem vorhergehenden Anspruch, wobei jedes der Formate eine Veränderung einer Skala und/oder einer Orientierung und/oder einer Form in Bezug auf das Ursprungsformat darstellt.

6. Verfahren nach einem vorhergehenden Anspruch, das ferner umfasst: Erzeugen einer druckbaren Darstellung der visuellen Erscheinung der Dokumentenseite (40) in dem gewünschten Format und Erzeugen einer druckbaren Darstellung der visuellen Erscheinung mindestens einer Teilmenge der ausgewählten Mustereinheit.

7. Verfahren zum Verarbeiten einer Position, die von einem Produkt stammt, das durch das Drucken einer Dokumentenseite (40) in einer übereinanderliegenden Beziehung zu einer Mustereinheit (PU) erzeugt worden ist, wobei die Mustereinheit (PU) einen vorgegebenen eindeutigen Teil eines Positions-Codierungsmusters (20) darstellt, wobei jede Dokumentenseite (40) ein Ursprungsformat und eine Anzahl von vorgegebenen druckbaren Formaten aufweist, wobei das Verfahren Folgendes umfasst:
Empfangen (140) der Position; und
Identifizieren (142) einer von mehreren Mustereinheiten (PU) auf der Grundlage der empfangenen Position;
**dadurch gekennzeichnet, dass** das Verfahren ferner Folgendes umfasst:
Zugreifen (144) auf eine Datenstruktur (60; 70), die verschiedene Mustereinheiten innerhalb der mehreren Mustereinheiten (PU) verschiedenen Transformationen zuordnet, wobei jede Transformation eine Formatumwandlung zwischen einem der druckbaren Formate und dem Originalformat darstellt, wobei die mehreren Mustereinheiten (PU) einen ersten Satz von primären Mustereinheiten (PP1-PPn) und einen zweiten Satz von sekundären Mustereinheiten (SP1-SP5) umfassen, und wobei die Datenstruktur (60; 70) jede sekundäre Mustereinheit (SP1-SP5) einer der verschiedenen Transformationen und mindestens einer primären Mustereinheit (PP1-PPn) zuordnet;
Identifizieren (146) einer Transformation, die der identifizierten Mustereinheit in der Datenstruktur (60; 70) zugeordnet ist; und
Anzeigen (148) der identifizierten Transformation.

8. Verfahren nach Anspruch 7, wobei jede Transformation eine Position innerhalb der zugeordneten sekundären Mustereinheit (SP1-SP5) in eine Position innerhalb der zugeordneten primären Mustereinheit (PP1-PPn) umwandelt.

9. Verfahren nach Anspruch 7 oder 8, wobei das Verfahren ferner das Anwenden der identifizierten Transformation auf die empfangene Position umfasst.

10. Verfahren nach Anspruch 7 oder 8, das ferner ein Identifizieren der Dokumentenseite (40) auf der Basis der empfangenen Position und ein Anwenden der identifizierten Transformation auf die Dokumentenseite (40) umfasst.

11. Computerprogramm, das Anweisungen umfasst, um einen Computer zu veranlassen, das Verfahren nach einem der Ansprüche 1 bis 10 durchzuführen.

12. Vorrichtung, um einen Übereinanderdruck einer Dokumentenseite (40) und eine von mehreren Mustereinheiten (PU) zu aktivieren, wobei jede Mustereinheit (PU) einen vorgegebenen eindeutigen Teil eines Positions-Codierungsmusters (20) darstellt, wobei die Vorrichtung (160) einen Prozessor mit damit verbundenen Programmanweisungen umfasst, wobei die Programmanweisungen aufgebaut sind, um das Verfahren nach einem der Ansprüche 1 bis 6 durchzuführen.

13. Vorrichtung zum Verarbeiten einer Position, die von einem Produkt stammt, das durch das Drucken einer Dokumentenseite (40) in einer übereinanderliegenden Beziehung zu einer Mustereinheit (PU) erzeugt worden ist, wobei die Mustereinheit (PU) einen vorgegebenen eindeutigen Teil eines Positions-Codierungsmusters (20) darstellt, wobei jede Dokumentenseite (40) ein Ursprungsformat und eine Anzahl von vorgegebenen druckbaren Formaten aufweist, wobei die Vorrichtung (170) einen Prozessor mit damit verbundenen Programmanweisungen umfasst, wobei die Programmanweisungen aufgebaut sind, um das Verfahren nach einem der Ansprüche 7 bis 10 durchzuführen.

## Revendications

1. Procédé destiné à permettre l'impression superposée d'une page (40) de document et d'une unité parmi une pluralité d'unités (PU) de motif, chaque unité (PU) de motif représentant une partie unique prédéterminée d'un motif (20) de codage de position, ledit procédé comportant les étapes consistant à :
obtenir (130) un format souhaité de la page (40) de document par rapport à un format d'origine ;
accéder (132) à une structure (50) de données associant des unités de motif différentes au sein de la pluralité d'unités de motif (PU) à des formats différents, la structure (50) de données identifiant un ensemble d'unités primaires (PP1-PPn) de motif, associant chaque unité primaire (PP1-PPn) de motif à une ou plusieurs unités secondaires (SP1-SP5) de motif et associant chaque unité secondaire (SP1-SP5) de motif à un desdits formats différents ;
sélectionner (134) ladite unité de motif considérée parmi la pluralité d'unités de motif (PU) dans la structure (50) de données sur la base du format souhaité, ladite sélection comportant les étapes consistant à : identifier une unité primaire de motif parmi l'ensemble d'unités primaires (PP1-PPn) de motif disponibles ; et sélectionner ladite unité de motif considérée parmi les unités secondaires (SP1-SP5) de motif qui sont associées à l'unité primaire de motif identifiée ; et
donner (136) une indication de l'unité de motif sélectionnée.

2. Procédé selon la revendication 1, **caractérisé en ce que**, dans ladite structure (50) de données, chaque unité secondaire (SP1-SP5) de motif est associée de façon unique à une seule unité primaire (PP1-PPn) de motif.

3. Procédé selon la revendication 1 ou 2, des groupes (100-104) d'unités secondaires (SP1) de motif étant définis dans une partie continue du motif, les unités secondaires (SP1) de motif de chaque groupe (100-104) étant disposées côte à côte et étant associées à des unités primaires (PP1-PPn) de motif différentes.

4. Procédé selon la revendication 3, toutes les unités secondaires (SP1) de motif du groupe (100-104) étant associées au même format.

5. Procédé selon l'une quelconque des revendications précédentes, chacun desdits formats représentant une modification d'échelle, d'orientation et / ou de forme par rapport au format d'origine.

6. Procédé selon l'une quelconque des revendications précédentes, comportant en outre les étapes consistant à : générer une représentation imprimable de l'aspect visuel de la page (40) de document dans ledit format souhaité, et générer une représentation imprimable de l'aspect visuel d'au moins un sous-ensemble de l'unité de motif sélectionnée.

7. Procédé de traitement d'une position issue d'un produit généré en imprimant une page (40) de document en relation de superposition avec une unité (PU) de motif, ladite unité (PU) de motif représentant une partie unique prédéterminée d'un motif (20) de codage de position, chaque page (40) de document possédant un format d'origine et un certain nombre de formats imprimables prédéterminés, ledit procédé comportant les étapes consistant à:
recevoir (140) la position ; et
identifier (142) une unité parmi une pluralité d'unités (PU) de motif sur la base de la position reçue ;
**caractérisé en ce que** le procédé comportant en outre les étapes consistant à :
accéder (144) à une structure (60 ; 70) de données associant différentes unités de motif au sein de ladite pluralité d'unités de motif (PU) à des transformations différentes, chaque transformation représentant une conversion de format entre un desdits formats imprimables et le format d'origine, ladite pluralité d'unités de motif (PU) comportant un premier ensemble d'unités primaires (PP1-PPn) de motif et un deuxième ensemble d'unités secondaires (SP1-SP5) de motif et ladite structure de données (60 ; 70) associant chaque unité secondaire (SP1-SP5) de motif à une desdites transformations et à au moins une unité primaire (PP1-PPn) de motif ;
identifier (146) une transformation associée à l'unité de motif identifiée dans la structure de données (60 ; 70) ; et
indiquer (148) la transformation identifiée.

8. Procédé selon la revendication 7, chaque transformation convertissant une position au sein de l'unité secondaire (SP1-SP5) de motif associée en une position au sein de l'unité primaire (PP1-PPn) de motif associée.

9. Procédé selon la revendication 7 ou 8, ledit procédé comportant en outre les étapes consistant à appliquer la transformation identifiée à la position reçue.

10. Procédé selon la revendication 7 ou 8, comportant en outre les étapes consistant à identifier ladite page (40) de document sur la base de la position reçue, et à appliquer la transformation identifiée à ladite page (40) de document.

11. Programme informatique comportant des instructions destinées à faire réaliser par un ordinateur le procédé selon l'une quelconque des revendications 1 à 10.

12. Appareil destiné à permettre l'impression superposée d'une page (40) de document et d'une unité parmi une pluralité d'unités de motif (PU), chaque unité (PU) de motif représentant une partie unique prédéterminée d'un motif (20) de codage de position, ledit appareil (160) comportant un processeur auquel sont associées des instructions de programme, les instructions de programme étant agencées pour réaliser le procédé selon l'une quelconque des revendications 1 à 6.

13. Appareil destiné à traiter une position issue d'un produit généré en imprimant une page (40) de document en relation de superposition avec une unité (PU) de motif, ladite unité (PU) de motif représentant une partie unique prédéterminée d'un motif (20) de codage de position, chaque page (40) de document possédant un format d'origine et un certain nombre de formats imprimables prédéterminés, ledit appareil (170) comportant un processeur auquel sont associées des instructions de programme, les instructions de programme étant agencées pour réaliser le procédé selon l'une quelconque des revendications 7 à 10.
